(19) **Europäisches Patentamt**

**European Patent Office**

**Office européen des brevets**

(11) **EP 1 617 358 A1**

(12) **EUROPEAN PATENT APPLICATION**

(43) Date of publication:
**18.01.2006 Bulletin 2006/03**

(51) Int Cl.:
***G06Q 10/00*** (2006.01)

(21) Application number: **04030110.3**

(22) Date of filing: **17.12.2004**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Wada, Tetsunori**<br>**Tsukuba-shi**<br>**Ibaraki-ken, 305-8569 (JP)** |
| (30) Priority: **07.07.2004 JP 2004199975** | (74) Representative: **Zangs, Rainer E.**<br>**Hoffmann Eitle,**<br>**Patent- und Rechtsanwälte,**<br>**Arabellastrasse 4**<br>**81925 München (DE)** |
| (71) Applicant: **KABUSHIKI KAISHA TOSHIBA**<br>**Tokyo (JP)** | Remarks:<br>Amended claims in accordance with Rule 86 (2) EPC. |

(54) **Solution search apparatus and initial value setting method thereof**

(57) In a solution search apparatus, a parameter search range input part acquires a search range of a parameter, and stores it in a parameter search range storing part. Then, with respect to the search range of the parameter stored in the parameter search range storing part, a parameter setting part sets initial values of the parameter so that logarithmic values of parameter values may become a uniform distribution and a normal distribution for at least a part of the search range of the parameter, and stores them in the parameter storing part. A search part reads the parameter stored in the parameter storing part and searches for a solution by a predetermined algorithm.

## Fig. 2

**Description**

BACKGROUND OF THE INVENTION

Field of the Invention

The present invention relates to a solution search apparatus and its initial value setting method. For example, the present invention relates to a calculation method of automatically searching values of a plurality of parameters used by a physical or chemical model included in a numerical software, by using a genetic algorithm, in order to make a discrepancy between a calculated value and given data be minimum.

Further, the solution search apparatus of the present invention is used for enhancing prediction ability of a simulator by reducing a discrepancy between the simulator and a measured result, and concretely, by setting a plurality of parameters of a transistor model included in a semiconductor circuit simulator in order to reduce a discrepancy between a calculated value and measured current voltage data (I-V data), or fitting a plurality of parameters of ion implantation model included in a semiconductor process simulator to reproduce a result of SIMS measurement.

Description of the Related Art

Generally, when searching for a plurality of parameter values of a model having a plurality of parameters and strong nonlinear behavior, if a discrepancy between a calculated value based on the parameter values and measured data is expressed as a function of these parameters, it is experientially known that there are many local-minimum values.

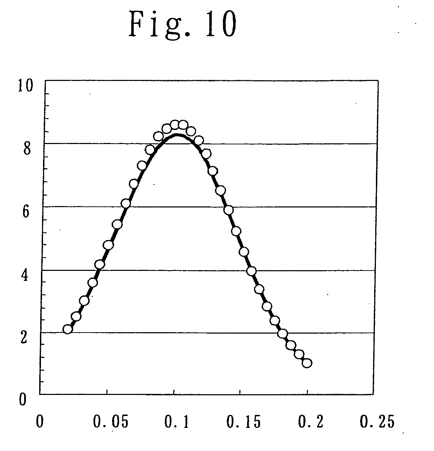

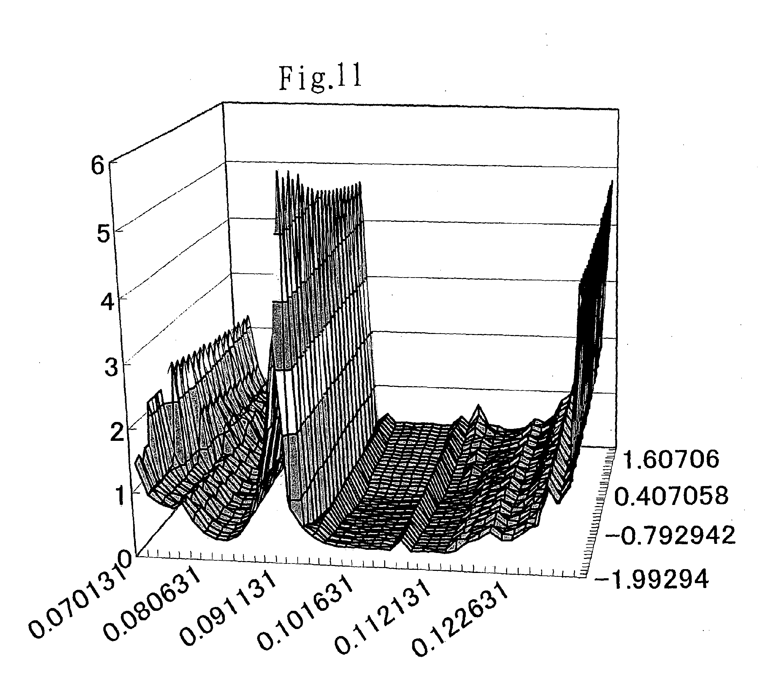

Fig. 10 shows the case a model function with four parameters, called a Pearson4 function, is fitted to target measured data (denoted by mark ○). As shown in Fig. 11, which is displaying the fitting errors with respect to two parameters, there appear two almost flat valleys (right and left). This means that there exist a plurality of parameter combinations which gives almost the same small fitting errors.

In such a case, seeking a parameter set with the minimum discrepancy is equivalent to seeking a parameter set being the lowest valley among many valleys. Such a problem is called a "multi-valley problem." If a search method utilizing a gradient of discrepancy given by a parameter set is applied to such a problem, the finally obtained parameter set will strongly depend on an initial parameter value given when search starts. Then, a genetic algorithm (GA) which can practically search a solution with a small discrepancy even in a multi-valley problem is noticed as a predominant technique in recent years.

In a genetic algorithm, a search range, expressed by a minimum value and a maximum value for each parameter, is given in advance for each parameter to be searched. Then, a value of each parameter is set up at random by using pseudo-random numbers uniformly distributed in the search range.

For example, when each parameter value is represented by 10-bit data composed of 1 or 0, in the case of searching for four parameters, forty bits of 1 or 0 data is used. This data is called a "gene." With respect to one gene, a value of discrepancy between a calculated model using the parameter set and measured data is arranged to be corresponding to the gene. This discrepancy value is called a "fitness value."

In this way, a sufficient number of pairs, for instance, one hundred of genes with their fitness values are generated using pseudo-random numbers.

The Related Arts of the present Invention are:

[Patent Document 1]
Japanese Unexamined Patent Publication No. JP2003-85526
[Non-Patent Document 1]
"Study of Parameter Extraction using Genetic Algorithm", by Wada and Kanemura, the Japan Society of Applied Physics, Silicone Technology Subcommittee, No.32, STM 01-07, pp. 37- 42, 2001

In the search stated above, it is necessary to specify a search range of a parameter. And an initial value of the parameter is set in the specified range. For example, when a parameter p0 is specified to be equal to or greater than 1 and equal to or less than 20, initial values of the parameter p0 are set by random numbers uniformly distributed between 1 and 20 for each gene. However, this method of setting an initial value does not work well for parameters whose search range covers several digits, due to the following reasons.

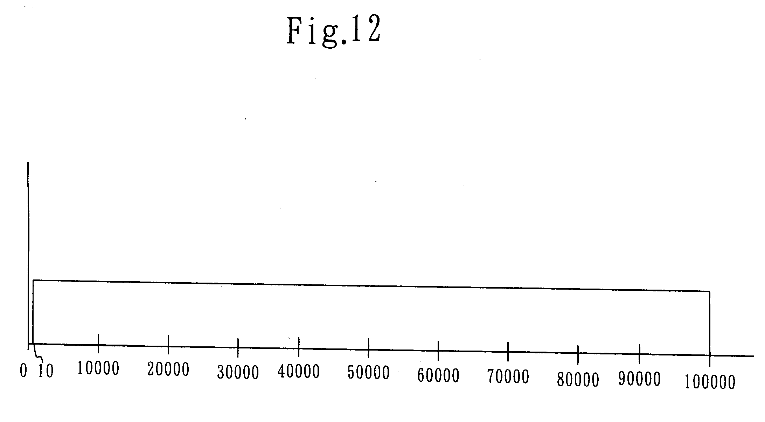

For example, searching for a true solution, being 20 in this case, of a parameter whose search range of p0 is wide, such as from 10 to 100000, by using one hundred genes will be examined. As shown in Fig. 12, if an initial distribution of p0 is made by using uniformly distributed random numbers between 10 and 100000, in the most case, we will get a value of several ten-thousands, and values equal to or less than 100, for example, will rarely be obtained as an initial value of p0. Therefore, after the search starting, the possibility of searching the range equal to or less than

EP 1 617 358 A1

100, for example, falls very much for the following reasons. In order to make p0 become a value in a specific range in a GA search, it is necessary to perform an operation of "crossover" and "mutation" based on a parameter value of a selected parent individual. In the case of the initial value of p0 being equal to or greater than 100 in all the gene individuals, since a bit sequence of 1 and 0 corresponding to the true solution being about 20 is not included in any gene individual, a bit sequence corresponding to a value about 20 is not produced by a crossover operation. Therefore, it cannot but wait for such a bit sequence to be generated by "mutation." Then, if the generation probability of mutation is highly set up, the probability of desirable bit sequence information narrowed down by crossover operation being destroyed will increase, and consequently the efficiency of search will fall.

SUMMARY OF THE INVENTION

The present invention has been contrived to solve the above problems. One of objects of the present invention is to increase efficiency of searching a solution by making an effective initial value and an initial distribution in solution searching.

These and other objects of the embodiments of the present invention are accomplished by the present invention as hereinafter described in further detail.

According to one aspect of the present invention, a solution search apparatus which searches for a solution by a predetermined algorithm, using a parameter having a predetermined search range, includes:

a parameter search range storing part to store a search range of a parameter;
a parameter storing part to store a plurality of parameters;
a parameter setting part to refer to the search range of the parameter stored in the parameter search range storing part, generate parameter values so that logarithmic values of the parameter values for at least a part of the search range of the parameter may be predeterminedly distributed, and store the parameter to which generated parameter values are set, in the parameter storing part; and
a search part to read the parameter to which the generated parameter values are set by the parameter setting part, from the parameter storing part, and search for the solution by the predetermined algorithm.

According to another aspect of the present Invention, the parameter setting part includes a uniform distribution calculation part to generate the parameter values so that the logarithmic values of the parameter values for at least a part of the search range of the parameter may be uniformly distributed.

According to one aspect of the present Invention, a solution search apparatus which searches for a solution by a predetermined algorithm, using a parameter having a predetermined search range, includes:

a parameter search range storing part to store a search range of a parameter;
a parameter storing part to store a plurality of parameters;
a parameter setting part to refer to the search range of the parameter stored in the parameter search range storing part, generate parameter values so that distribution of logarithmic values of the parameter values for a part of the search range of the parameter may become denser compared with distribution of logarithmic values of parameter values for other part of the search range, and store the parameter to which generated parameter values are set, in the parameter storing part; and
a search part to read the parameter to which the generated parameter values are set by the parameter setting part, from the parameter storing part, and search for the solution by the predetermined algorithm.

According to another aspect of the present Invention, the parameter setting part includes a normal distribution calculation part to generate the parameter values so that the distribution of the logarithmic values of the parameter values for a part of the search range of the parameter may become a normal distribution.

According to another aspect of the present Invention, the parameter setting part includes a uniform distribution calculation part to generate parameter values so that distribution of logarithmic values of the parameter values for other part of the search range of the parameter may become a uniform distribution.

According to one aspect of the present Invention, an initial value setting method of a solution search apparatus, which searches for a solution with updating a parameter value stored in a storing part, by using a genetic algorithm, includes:

acquiring a search range of a parameter and storing the search range of the parameter in a storing part; and
setting initial values of a parameter so that logarithmic values of parameter values may be predeterminedly distributed for the search range of the parameter stored in the storing part, and storing the initial values in the storing part.

3

According to another aspect of the present Invention, the initial values of the parameter are set so that distribution of the logarithmic values of the parameter values for at least a part of the search range of the parameter may become a uniform distribution.

According to another aspect of the present Invention, the initial values of the parameter are set so that the distribution of the logarithmic values of the parameter values for at least a part of the search range of the parameter may become a normal distribution.

Further scope of applicability of the present invention will become apparent form the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:

Fig. 1 shows an example of an outward view of a solution search apparatus 100 according to Embodiment 1;

Fig. 2 shows an example of a hardware configuration of the solution search apparatus 100 according to Embodiment 1;

Fig. 3 shows an example of a logical structure of the solution search apparatus 100 according to Embodiment 1;

Fig. 4 shows a logarithmic distribution of an initial value of a parameter p0 according to an initial value setting step of a parameter setting part 12 of Embodiment 1;

Fig. 5 shows explanation of a genetic algorithm as a method of searching for an optimum value by a search part 15;

Fig. 6 shows a result of executing GA by setting initial values of a parameter value according to the method of the present Embodiment;

Fig. 7 shows a result of executing GA by setting initial values of a parameter value according to a conventional simple uniform distribution;

Fig. 8 shows fitting errors with respect to a model function including a parameter whose search range changes within several digits;

Fig. 9 shows a logarithmic distribution of an initial value of a parameter p0 according to an initial value setting step of a parameter setting part 12 of Embodiment 2;

Fig. 10 shows a calculation example (curve) of fitting a Pearson4 function to target data (denoted by mark ○);

Fig. 11 shows a result of representing fitting errors corresponding to two of four parameters in the result of Fig. 10, on the vertical axis; and

Fig. 12 shows an initial distribution uniformly distributed in the search range (from 10 to 100000) of the parameter p0.

## DETAILED DESCRIPTION OF THE PREFERRED EMBODIMENTS

Reference will now be made in detail to the present preferred embodiments of the invention, examples of which are illustrated in the accompanying drawings, wherein like reference numerals indicate like devices through out the several views.

Embodiment 1.

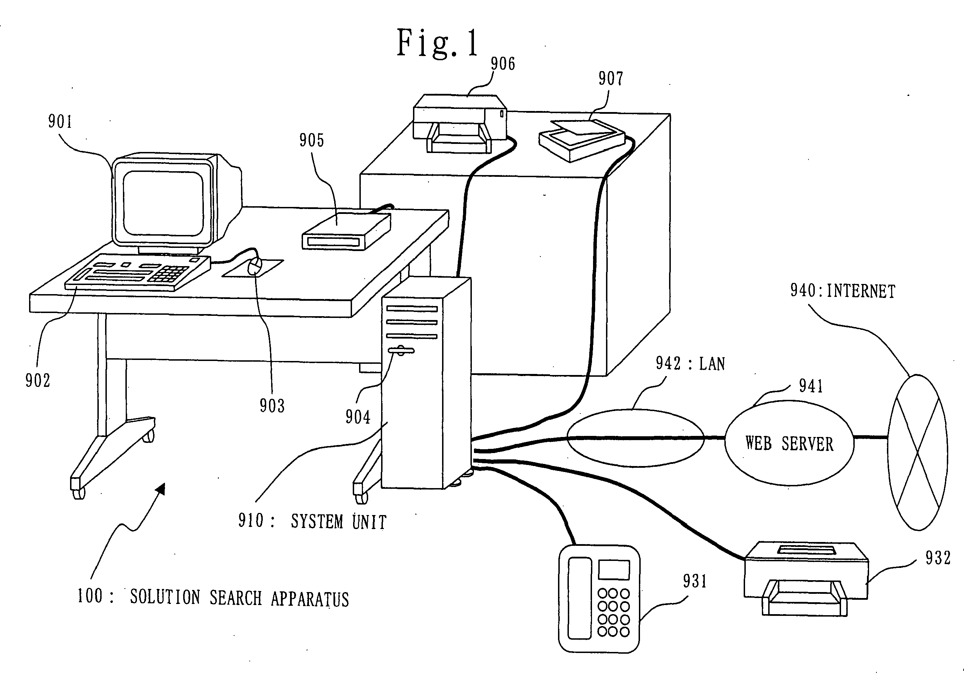

Fig. 1 shows an example of an outward view of a solution search apparatus according to Embodiment 1. In Fig. 1, a solution search apparatus 100 is equipped with a system unit 910, a CRT (Cathode Ray Tube) display 901, a keyboard (K/B) 902, a mouse 903, a compact disk drive (CDD) 905, a printer device 906, and a scanner device 907, and these are connected through cables. Furthermore, the solution search apparatus 100 is connected to a facsimile machine 932 and a telephone 931 through cables, and to the Internet 940 through a local area network (LAN) 942 and a web server 941.

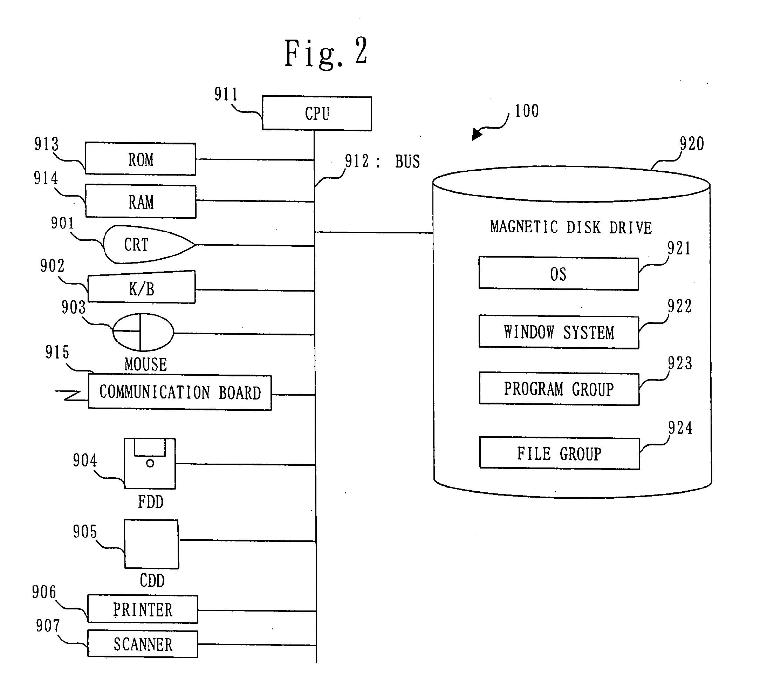

Fig. 2 shows an example of a hardware configuration of the solution search apparatus 100 according to Embodiment 1. In Fig. 2, the solution search apparatus 100 includes a CPU (Central Processing Unit) 911 which executes a program. The CPU 911 is connected to a ROM 913, a RAM 914, a communication board 915, the CRT display 901, the K/B 902, the mouse 903, a FDD (Flexible Disk Drive) 904, a magnetic disk drive 920, the CDD 905, the printer device 906, and the scanner device 907, through a bus 912.

The RAM 914 is an example of a volatile memory, and the ROM 913, the FDD 904, the CDD 905, and the magnetic disk drive 920 are examples of nonvolatile memories. These are examples of storage devices or storing parts.

The communication board 915 is connected to the facsimile machine 932, the telephone 931, the LAN 942, etc. The communication board 915, the K/B 902, the scanner device 907, the FDD 904, etc. are examples of input parts. The communication board 915, the CRT display 901, etc. are examples of output parts.

It is also acceptable to directly connect the communication board 915 to the Internet 940 or a WAN (Wide Area Network), such as ISDN, without being connected to the LAN 942. When the communication board 915 is directly connected to the Internet 940 or the WAN, such as ISDN, the solution search apparatus 100 is connected to the Internet 940 or the WAN, such as ISDN. Then, the web server 941 becomes unnecessary.

In the magnetic disk drive 920, an operating system (OS) 921, a window system 922, a program group 923, and a file group 924 are stored. The program group 923 is executed by the CPU 911, the OS 921, and the window system 922.

In the program group 923, programs which execute functions of what is described as a " - part" in Embodiment below are stored. The programs are read and executed by the CPU 911.

In the file group 924, what is described as a "judgment result of - ", " calculation result of - ", and "processing result of - " in Embodiment below are stored as a " - file".

Arrows in the flowchart explained in Embodiment below mainly show inputs or outputs of data. Then, in order to be inputted or outputted, the data is recorded in the magnetic disk drive 920, a FD (Flexible Disk), an optical disk, a CD (compact disk), a MD (mini disk), a DVD (Digital Versatile Disk), and other recording medium, or transmitted through a signal line or other transmission medium.

Moreover, it is also acceptable to execute what is described as a "- part" in Embodiment below, by firmware stored in the ROM 913, or to execute it by software only, hardware only, a combination of software and hardware, or a combination of software, hardware and firmware.

Furthermore, it is also acceptable to store the programs for executing Embodiment described below, by using the magnetic disk drive 920, a FD (Flexible Disk), an optical disk, a CD (compact disk), a MD (mini disk), a DVD (Digital Versatile Disk) and a recording apparatus made of other recording medium.

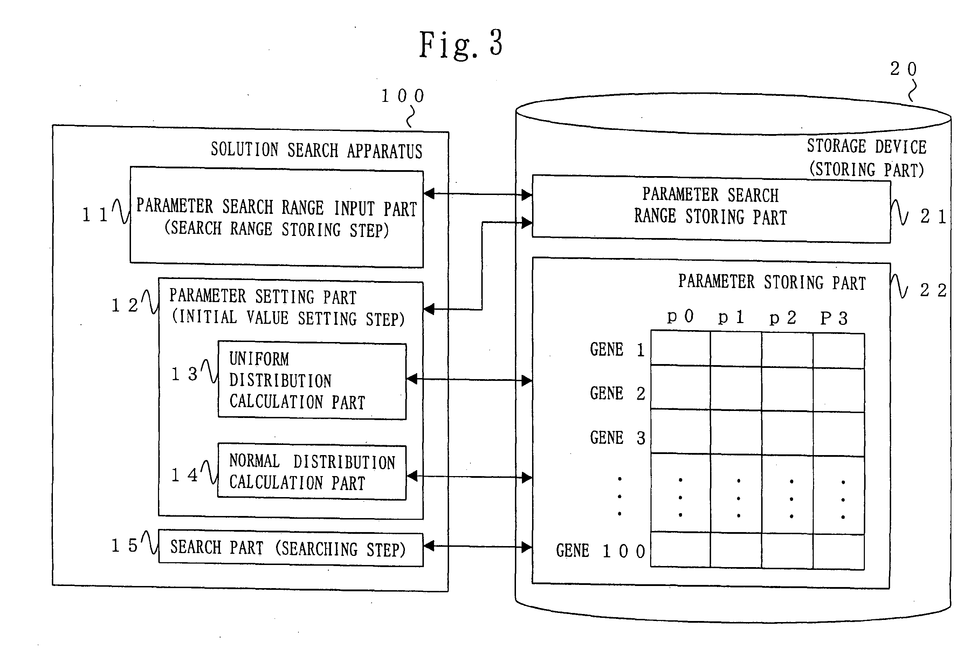

Fig. 3 shows an example of a logical structure of the solution search apparatus 100 according to Embodiment 1. The solution search apparatus 100 in Fig. 3 is an apparatus which searches for a solution by a predetermined genetic algorithm, with using a parameter having a predetermined search range.

The solution search apparatus 100 includes a parameter search range storing part 21 which stores a search range of a parameter, and a parameter storing part 22 which stores genetic data (henceforth, called a gene or an individual) having a plurality of parameters. In Fig. 3, a gene is a model function which has four parameters $p0$, $p1$, $p2$, and $p3$. Fig. 3 shows the case where one hundred genes are stored.

The solution search apparatus 100 includes a parameter search range input part 11 which inputs a search range of a parameter from an input apparatus and stores the search range of the parameter in the parameter search range storing part 21.

The solution search apparatus 100 also includes a parameter setting part 12 which refers to a search range of a parameter stored in the parameter search range storing part 21, generates parameter values so that logarithmic values of the parameter values for at least a part of the search range of the parameter may be predeterminedly distributed, and stores the parameter to which the generated parameter values are set, in the parameter storing part 22.

The solution search apparatus 100 also includes a search part 15 which reads the parameter to which the parameter values are set by the parameter setting part 12, from the parameter storing part 22, and searches for a solution by the genetic algorithm.

The parameter setting part 12 includes a uniform distribution calculation part 13 which generates parameter values so that logarithmic values of the parameter values for at least a part of the search range may be uniformly distributed. A normal distribution calculation part 14 will be explained in Embodiment 2.

An initial value setting method of the solution search apparatus, which searches for a solution with updating a parameter value stored in the storing part, by using a genetic algorithm will be explained. The initial value setting method of the solution search apparatus according to Embodiment 1 is characterized by a setting method of an initial value of the parameter $p0$ which can be with several digits.

For example, the case of fitting a model function having four parameters $p0$, $p1$, $p2$, and $p3$ including the parameter $p0$ which can be a value from 10 to 100000, to given measured data will be described. Moreover, the case of searching for a parameter by GA using one hundred individuals will be described.

The following operations are performed in a search range storing step. The parameter search range input part 11 inputs search ranges of the parameters $p0$, $p1$, $p2$, and $p3$ from the input apparatus, and stores the search ranges in the parameter search range storing part 21. The search range herein is represented by a minimum value and a maximum value.

It is herein assumed that the parameter $p0$ can be a value from 10 to 100000. That is, the minimum value of the parameter p0 is p0min=10 and the maximum value is p0max=100000.

It is also assumed that the search ranges of the parameters p0, p1, p2, and p3 were input as follows:

The minimum value of the parameter p1 is p1min, and the maximum value is p1max.
The minimum value of the parameter p2 is p2min, and the maximum value is p2max.
The minimum value of the parameter p3 is p3min, and the maximum value is p3max.

The following operations are performed in an initial value setting step. The parameter setting part 12 refers to the search ranges of the parameters p0, p1, p2, and p3 stored in the parameter search range storing part 21, sets up initial values of the parameters, and stores them in the parameter storing part 22.

The uniform distribution calculation part 13 generates one hundred parameter values so that logarithmic values of the parameter values for the search range of the parameter p0 may be uniformly distributed, sets the generated one hundred parameter values to the parameter p0 of the individual of the parameter storing part 22, and stores them. That is, in the case of searching for a parameter by GA using one hundred individuals, one hundred p0s are calculated for each individual by p0=10^{log(p0min) +R* (log (p0 max/p0min))} (^ indicates power) regarding R as a random number uniformly distributed between [0, 1].

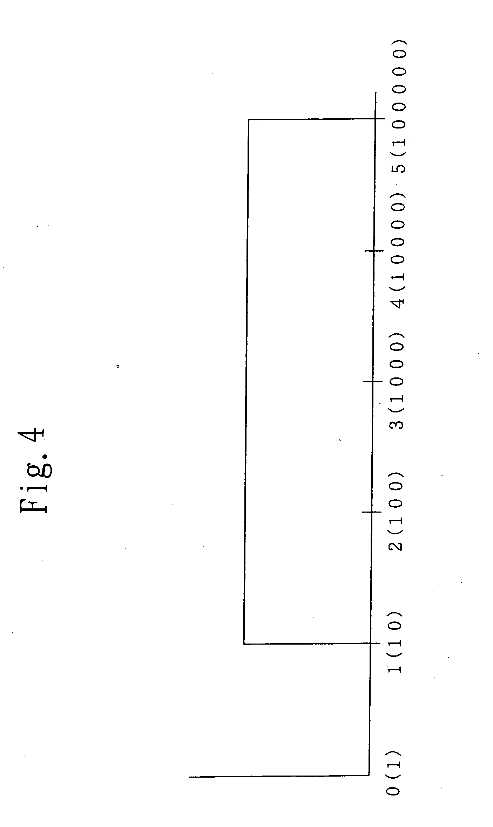

Fig. 4 shows a logarithmic distribution of the initial value of the parameter p0 according to the initial value setting step of the parameter setting part 12 of Embodiment 1. The horizontal axis showing a logarithmic scale indicates the logarithmic value of p0, namely log (p0). The vertical axis indicates generation probability of a parameter. Assuming that the minimum value of the parameter p0 is p0min = 10 and the maximum value is p0max = 100000, the logarithmic value of p0, namely log (p0), will be calculated as follows. The base is supposed to be 10.

$$\log(p0) = \log 10^{\{\log (p0min)+R*(\log (p0\ max/p0min))\}}$$

$$\log(p0) = \log 10^{\{\log(10)+R* (\log (100000/10))\}}$$

$$\log(p0) = \log 10^{\{\log(10)+R* (\log (10000))\}}$$

$$\log(p0) = \log 10^{\{1+R*4\}}$$

$$\log(p0) = 1+R*4$$

where R denotes a random number uniformly distributed between [0, 1], the minimum value of R is 0 (minimum value = 0) and the maximum value of R is 1 (maximum value = 1) .
when R = 0, log-p0) =1+R*4=1, and
when R = 1, log-p0) =1+R*4=5

Therefore, the minimum value of the logarithmic value of p0 is 1, (minimum value =1) and the maximum value is 5 (maximum value = 5). Since R is a random number uniformly distributed between [0, 1], the logarithmic value of p0 is also distributed uniformly. Then, as shown in Fig. 4, the logarithmic value of p0 is uniformly distributed between 1 and 5.

On the other hand, the parameter setting part 12 calculates one hundred parameters of p1, p2, and p3 respectively for each individual by the following calculation, regarding R as a random number uniformly distributed between [0, 1].

$$p1 = p1min+R* (p1max - p1min)$$

$$p2 = p2min+R*(p2\ max - p2min)$$

$$p3 = p3min+R*(p3max - p3min)$$

By dint of the above, p1, p2, and p3 are uniformly distributed between their own maximum values and minimum values.

The following operations are performed in a searching step. The search part 15 reads an individual to which parameter values have been set by the parameter setting part 12, from the parameter storing part 22, and searches for an optimum solution by a genetic algorithm.

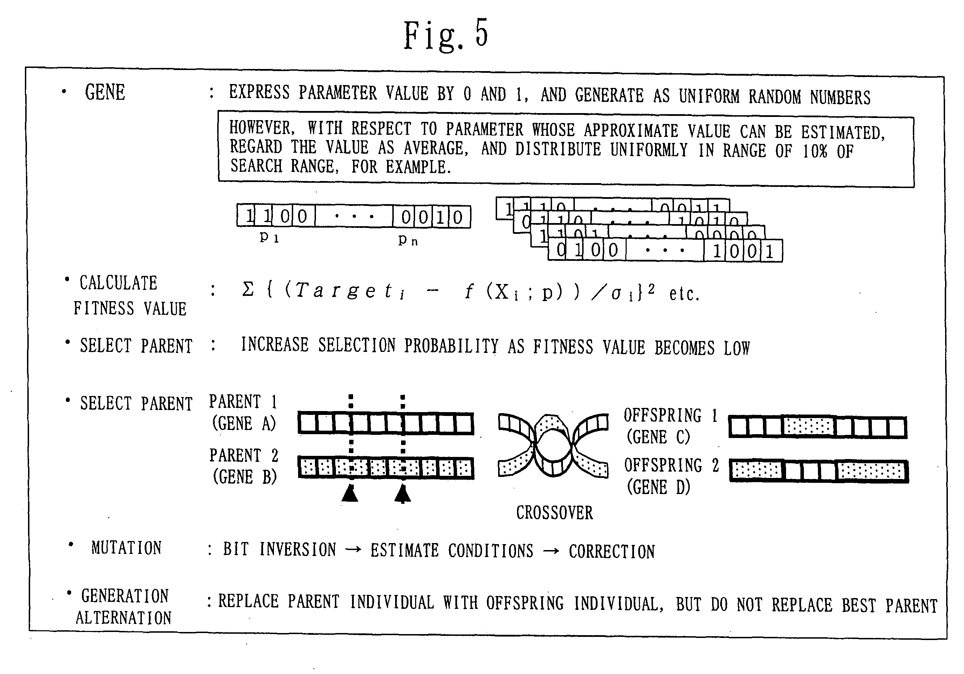

With reference to Fig. 5, the genetic algorithm will be explained as a method of searching for the optimum solution by the search part 15.

When each parameter value is represented by a 10-bit sequence composed 1 or 0, in the case of four parameters, the gene becomes a sequence expressed by 1 or 0 of forty bits.

With respect to one gene, a value of discrepancy between a value calculated by a model function by using a parameter set representing the gene and measured data is arranged to be corresponding to the gene. This discrepancy value is called a "fitness value."

The search part 15 selects two genes A and B by a selection method in which a gene with a desirable fitness value, i.e. a smaller fitness value, can be easily selected at random than other genes. Each of Genes A and B is called a "parent."

With respect to each 40-bit sequence composed of 1 or 0, the search part 15 crosses the two genes at the place corresponding to a number equal to or less than 40 selected at random in the sequence of 40 bits in order to create two new genes C and D composed of 1 or 0. Each of Genes C and D is called an "offspring."

For example, Gene C has the same bit order from the beginning to the 13th as that of Gene A, the same bit order from the 14th to the 37th as that of Gene B, and the same bit order from the 38th to the end as that of Gene A. Gene D has the same bit order from the beginning to the 13th as that of Gene B, the same bit order from the 14th to the 37th as that of Gene A, and the same bit order from the 38th to the end as that of Gene B. This operation of the search part 15 is called "crossover."

Next, the search part 15 reverses the values of 1 and 0 of Genes C and D at a predetermined rate, for example 5%, and calculates fitness values of Genes C and D respectively. This operation of the search part 15 is called "mutation." In this example, the above-mentioned operation of the search part 15 is repeated fifty times to create one hundred new genes. When the number of new genes becomes the same as the number of the genes created first, only a gene with the smallest fitness value in the genes created first is left and other ninety-nine in the genes created first are replaced with ninety-nine new created genes except for a gene with the greatest fitness value in the new created genes.

The search part 15 repeats the above-mentioned operation. As the above-mentioned operation is repeated, the value of a parameter of a gene with the minimum fitness value in the one hundred genes approaches the minimum value (the optimum solution) gradually. By repeating selection of a parent, crossover, and mutation at the searching step after an initial gene having been generated at the initial value setting step, the search based on information about a parameter value can be effectively forwarded.

In Embodiment 1, as mentioned above, the solution search apparatus 100 has the function of reading a model function specified by the user, information about the number of a plurality of parameters and their search ranges, a target measured data file to be fitted, and information about a file for outputting a calculation result, the function of performing calculation processing to search for a minimum value by using a genetic algorithm, and the function of writing a search result of a parameter into a specified file.

Furthermore, the solution search apparatus 100 has the function of reading a search range of a parameter specified by a user and estimated values of the parameter specified by the user, and the function of setting a parameter so that logarithmic distribution of the parameter may be uniformly distributed in the search range of the parameter in the initial setting operation of the parameter, based on the specification contents of specifying the initial value.

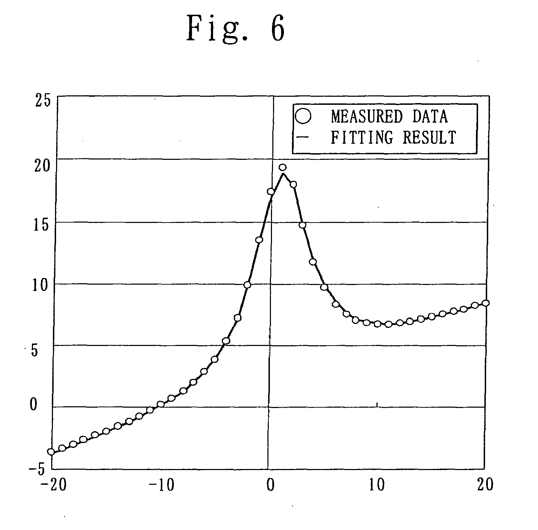

Effects acquired according to the present Embodiment will be described below. Fig. 6 shows a result of setting initial values of a parameter so that logarithmic values of the parameter may be uniformly distributed by the method according to the present Embodiment, and of performing fitting by GA using two hundred individuals for the given measured data (marked ○), with assuming that Lorentz function having five model parameters is a model function and the range of one of the five parameters is between 10 and 100000.

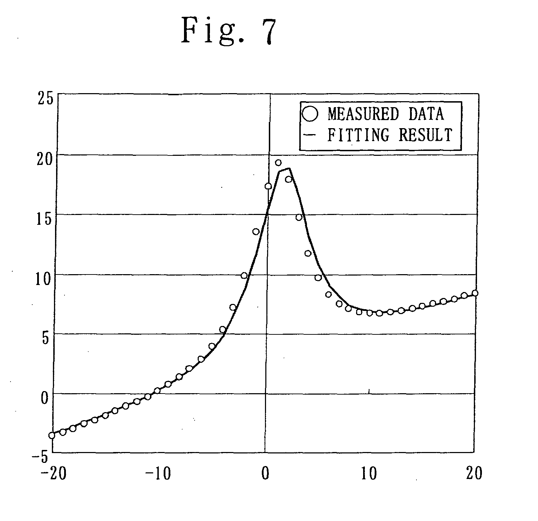

Fig. 7 shows a result of setting an initial value by a conventional method which uses random numbers making all the parameters be uniformly distributed. Comparing Fig. 6 and Fig. 7, it turns out that data is more consistent in the present Embodiment.

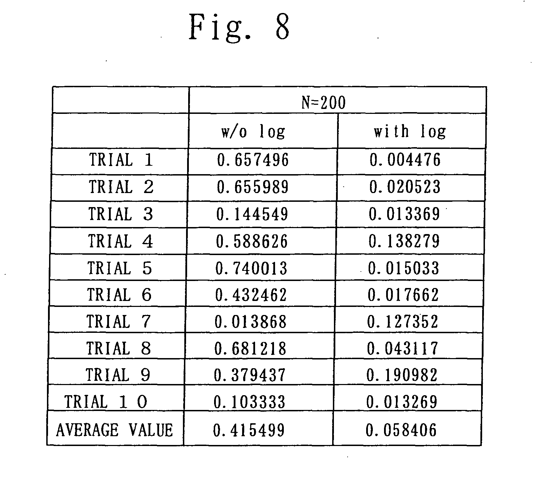

Fig. 8 shows fitting errors in repeating extraction ten times with changing a random number series for the above-mentioned case. Relating to a random number generated inside a computer, an integer being a "seed" is given first, and a number obtained by performing calculation for the integer is used as a random number. "To change a random number series" herein means to change a value of the seed given first. If a random number series is changed, a result will minutely change in the case of GA. Therefore, by performing GA several times with changing a random number series, the stability of the present Embodiment (calculation program) can be verified. That is, in the present Embodiment, it can be confirmed difference between generated random numbers and difference between random number series do not have a large influence on the accuracy of the fitting errors.

The first column shows a trial number. The second column shows a fitting error of a result of the conventional method in which initial values of a parameter of each individual are set by random numbers all uniformly distributed and of the calculation performed by using the initial values having been set. The third column shows a fitting error of a result which is given by the method according to the present Embodiment, i.e. setting an initial value so that logarithmic values of parameters having wide search ranges may be uniformly distributed.

Since random numbers are used in calculation of GA, calculation results generally differ slightly each time. Thus, it is important to try repeatedly in order to confirm the stability of the present Embodiment (calculation program).

When comparing the stability of the conventional method and the present Embodiment, as shown in the graph of Fig. 7 and the values of the second column of Fig. 8, the fitting errors according to the conventional method are large, and as shown in the graph of Fig. 6 and the values of the third column of Fig. 8, the fitting errors according to the method of the present Embodiment are smaller than those of the conventional method in almost all the cases.

Embodiment 2.

A different point of Embodiment 2 from Embodiment 1 will be explained with reference to Fig. 3. The solution search apparatus 100 according to Embodiment 2 has the following features: the parameter setting part 12 refers to a search range of a parameter stored in the parameter search range storing part 21, generates parameter values so that distribution of logarithmic values of the parameter values for a part of the search range of the parameter may become denser compared with distribution of logarithmic values of the parameter values for other part of the search range, and stores the parameter to which the generated parameter values are set, in the parameter storing part 22.

The normal distribution calculation part 14 generates parameter values so that distribution of logarithmic values of the parameter values for a part of the search range of the parameter may become a normal distribution. Operations of the initial value setting step of the parameter setting part 12 of the solution search apparatus 100 according to Embodiment 2 will be explained.

It is also assumed that the value of the parameter p0 can be with several digits, and an estimated value p0' of the parameter p0 is to be given. The parameter search range input part 11 inputs the estimated value p0', the maximum value p0max, and the minimum value p0min of the parameter p0 from the input apparatus, as information on an initial value, and stores them in the parameter search range storing part 21.

When the estimated value p0', the maximum value p0max, and the minimum value p0min of the parameter p0 are given, with respect to genes of 30% of all the genes for example, the normal distribution calculation part 14 distributes initial values of the parameter p0 so that they may be distributed as Gaussian distribution, whose average value is p0' and the width of the Gaussian distribution is (p0max - p0min) / 5, on the logarithmic axis. With respect to remaining 70% of individuals, the uniform distribution calculation part 13 sets the value of p0 so that logarithmic values of the p0 may be uniformly distributed, by the method according to Embodiment 1. In this way, the given information on the initial value can be effectively used.

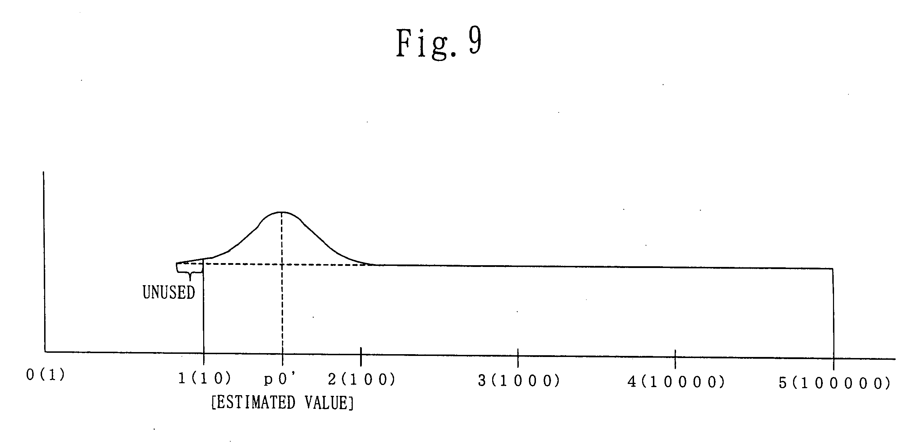

Fig. 9 shows a logarithmic distribution of the initial value of the parameter p0 according to the initial value setting step of the parameter setting part 12 of Embodiment 2. The horizontal axis showing a logarithmic scale indicates the logarithmic value of p0, namely log (p0). The vertical axis indicates generation probability of a parameter.

Fig. 9 shows the case, as an example, the uniform distribution calculation part 13 generates seventy parameter values so that logarithmic values may be uniformly distributed, and the normal distribution calculation part 14 generates thirty parameter values so that they may be distributed as the Gaussian distribution, whose average value is p0,' on the logarithmic axis. As shown in Fig. 9, by estimating the value of solution of p0 to be p0' and adding parameter values distributed as the Gaussian distribution whose average value is p0' to parameter values uniformly distributed, probability of generating the parameter values adjacent to the estimated value p0' increases. If the parameter values generated by the above-mentioned Gaussian distribution becomes equal to or less than p0min or equal to or greater than p0max, by discarding the value and repeating the setup operation again, all the initial values can certainly be within the search range. Fig. 9 shows the case in which the portion where the parameter values on the Gaussian distribution become equal to or less than p0min is not used.

Relating to the rate of a parameter value to be generated by the Gaussian distribution, the reason for 30% being desirable will be explained.

An estimated value set up by the user is sometimes very much different from an actual solution. If parameter values are spread only near an estimated value of the parameter concerned for all individuals, because of the reason mentioned above, the probability of searching up to a far search range becomes low. Therefore, the likelihood of search failure becomes high. Then, some are arranged to thoroughly search near the estimated value, and others are arranged throughout the search range as many places as possible so as to prepare for failure of the estimated value. If the estimated value is proper, it becomes short to search for a solution, and even if the estimated value is not proper, since the whole parameter values are covered, the solution search will be hard to fail. This is the reason for setting the rate 30%. However, 30% has no reason in strict meaning, and is an experiential numerical value.

Moreover, in order to "net" densely near the estimated value, it is desirable to use the Gaussian distribution, in which the parameter generation rate becomes higher in proportion to coming near the estimated value.

Next, the reason for (p0max - p0min) / 5 being desirable as a width of the Gaussian distribution will be explained. If random numbers (random numbers with a narrow distribution width) whose parameter values are too close to the initial value are generated, compensation will be large when failing in estimating the estimated value. Therefore, being approximately 1 / 5 (one-fifth) of the whole is considered to be a range for thoroughly searching near the initial value.

In addition, 30% and 1/5 are mutually related in the following meaning. For example, with respect to 30% (3 /10) of the individuals, if initial values of a parameter are generated in the range of 30% (3 / 10) of the whole search range of the parameter, it becomes almost the same case as initial values uniformly generated in the whole search range. That is, if the number of parameter values to be generated and the range of parameter values to be generated are set to be the same, it might be meaningless. This is the reason for setting the number having a different rate from the range. Then, it is set that the rate of the number is 3 / 10, the rate of the range is 1 / 5 = 2 / 10, and the rate of the number > the rate of the range. That is, many numbers are generated in a narrow range, and the number and the range have correlation in this sense.

As mentioned above, the initial value setting operation of Embodiment 2 is characterized by the function of distributing logarithmic values of a target parameter to be searched, to be dense near a specified estimated value based on the specification of a user, and distributing logarithmic values almost uniformly at the other part of the range.

According to the present Embodiment, by repeating selection of a parent, crossover, and mutation at the searching step after an initial gene having been generated at the initial value setting step, the search based on information known beforehand about a parameter value can be effectively forwarded.

In this example, the case has been described that the uniform distribution calculation part 13 generates seventy parameter values so that logarithmic values may be uniformly distributed, and the normal distribution calculation part 14 generates thirty parameter values so that they may be distributed as the Gaussian distribution, whose average value is p0', on the logarithmic axis. However, it is also acceptable that the uniform distribution calculation part 13 do nothing and only the normal distribution calculation part 14 generates all the one hundred parameter values so that they may be distributed as the Gaussian distribution, whose average value is p0', on the logarithmic axis.

Moreover, it is also acceptable that the parameter setting part 12 generates another distribution other than the uniform distribution and the normal distribution. It is also acceptable the search method of an optimum parameter solution according to the function of the solution search apparatus 100 is realized by a program executed by a computer. Furthermore, it is also acceptable to use not a genetic algorithm but other solution search algorithm.

Having thus described several particular embodiments of the present invention, various alterations, modifications, and improvements will readily occur to those skilled in the art. Such alterations, modifications, and improvements are intended to be part of this disclosure, and are intended to be within the spirit and scope of the present invention. Accordingly, the foregoing description is by way of example only, and is not intended to be limiting. The present invention is limited only as defined in the following claims and the equivalents thereto.

**Claims**

1. A solution search apparatus(100) which searches for a solution by a predetermined algorithm, using a parameter having a predetermined search range, the solution search apparatus(100) comprising:

a parameter search range storing part(21) to store a search range of a parameter;
a parameter storing part ( 22 ) to store a plurality of parameters;
a parameter setting part(12) to refer to the search range of the parameter stored in the parameter search range storing part ( 21 ) , generate parameter values so that logarithmic values of the parameter values for at least a part of the search range of the parameter may be predeterminedly distributed, and store the parameter to which generated parameter values are set, in the parameter storing part(22); and
a search part (15) to read the parameter to which the generated parameter values are set by the parameter setting part(12), from the parameter storing part(22), and search for the solution by the predetermined algorithm.

2. The solution search apparatus (100) according to claim 1, wherein the parameter setting part(12) includes a uniform distribution calculation part(13) to generate the parameter values so that the logarithmic values of the parameter values for at least a part of the search range of the parameter may be uniformly distributed.

3. A solution search apparatus(100) which searches for a solution by a predetermined algorithm, using a parameter having a predetermined search range, the solution search apparatus(100) comprising:

> a parameter search range storing part(21) to store a search range of a parameter;
> a parameter storing part (22) to store a plurality of parameters;
> a parameter setting part(12) to refer to the search range of the parameter stored in the parameter search range storing part(21), generate parameter values so that distribution of logarithmic values of the parameter values for a part of the search range of the parameter may become denser compared with distribution of logarithmic values of parameter values for other part of the search range, and store the parameter to which generated parameter values are set, in the parameter storing part(22); and
> a search part (15) to read the parameter to which the generated parameter values are set by the parameter setting part(12), from the parameter storing part(22), and search for the solution by the predetermined algorithm.

4. The solution search apparatus(100) according to claim 3, wherein the parameter setting part(12) includes a normal distribution calculation part(14) to generate the parameter values so that the distribution of the logarithmic values of the parameter values for a part of the search range of the parameter may become a normal distribution.

5. The solution search apparatus(100) according to claim 3 or 4, wherein the parameter setting part(12) includes a uniform distribution calculation part(13) to generate parameter values so that distribution of logarithmic values of the parameter values for other part of the search range of the parameter may become a uniform distribution.

6. An initial value setting method of a solution search apparatus(100), which searches for a solution with updating a parameter value stored in a storing part(20), by using a genetic algorithm, the initial value setting method comprising:

> acquiring a search range of a parameter and storing the search range of the parameter in a storing part; and
> setting initial values of a parameter so that logarithmic values of parameter values may be predeterminedly distributed for the search range of the parameter stored in the storing part(20), and storing the initial values in the storing part.

7. The initial value setting method of the solution search apparatus(100) according to claim 6, wherein the initial values of the parameter are set so that distribution of the logarithmic values of the parameter values for at least a part of the search range of the parameter may become a uniform distribution.

8. The initial value setting method of the solution search apparatus(100) according to claim 6 or 7, wherein the initial values of the parameter are set so that the distribution of the logarithmic values of the parameter values for at least a part of the search range of the parameter may become a normal distribution.

**Amended claims in accordance with Rule 86(2) EPC.**

**1.** Apparatus (100) for simulating a model function of a physical and/or chemical model with at least one parameter to be predicted with a minimum discrepancy between the calculated values according to the simulated model and given data, the at least one parameter having a predetermined search range
comprising
a parameter search range storing part (21) storing a search range for the at least one parameter;
a parameter storing part (22) for storing a plurality of parameter values for each of the at least one parameters;
a parameter setting part (12) for generating for each parameter a plurality of initial parameter values, which lie within at least a part of the search range of the respective parameter stored in the parameter search range storing part (21) and storing the generated parameter values in the parameter storing part (22); and
a search part (15) for reading the parameter values from the parameter storing part (22) and simulating the model function according to a predetermined algorithm;
**characterized by**

the parameter setting part (12) generating for each parameter the plurality of initial parameter values so as to distribute the logarithmic values of the initial parameter values for at least a part of the search range of the respective parameter according to a predetermined distribution.

**2.** Apparatus (100) according to the preceding claim, **characterized in that** the predetermined algorithm is a genetic search algorithm.

**3.** Apparatus (100) according to the preceding claims, **characterized in that** the model function comprises at least two, three or more parameters to be predicted.

**4.** Apparatus (100) according to the preceding claims, **characterized in that** the given data are measured data.

**5.** Apparatus (100) according to the preceding claims, **characterized in that** the model function is specified by a user.

**6.** Apparatus (100) according to one of the preceding claims, **characterized in that** the parameter setting part (12) includes a uniform distribution calculation part (13) for generating the initial parameter values so as to distribute the logarithmic values of the initial parameter values for at least a part of the search range of the parameter in a uniform distribution.

**7.** Apparatus (100) according to one of the preceding claims, **characterized in that** the parameter setting part (12) generates the initial parameter values so as to distribute the logarithmic values of the initial parameter values for a part of the search range of the parameter denser compared with the distribution of logarithmic values of parameter values for the other part of the search range.

**8.** Apparatus (100) according to one of the preceding claims, **characterized in that** the parameter setting part (12) includes a normal distribution calculation part (14) for generating the parameter values so as to distribute the logarithmic values of the initial parameter values for a part of the search range of the parameter in a normal distribution.

**9.** Apparatus according to one of the preceding claims, **characterized in that** the model function describes the ion implantation in a semiconductor material.

**10.** Apparatus according to the preceding claim, **characterized in that** the model function describes the ion implantation in a transistor.

**11.** Apparatus according to one of the two preceding claims, **characterized in that** the given data are data measured by secondary ion mass spectroscopy (SIMS).

**12.** Apparatus according to one of the preceding claims, **characterized in that** at least one of the parameter search range storing part (21), the parameter storing part (22), the parameter setting part (12), the search part (15), the uniform distribution calculation part (13) and the normal distribution calculating part are implemented as hardware, firmware, software or a combination thereof.

# Fig.1

906

907

901

905

940:INTERNET

902

903

904

942:LAN

941

WEB SERVER

910: SYSTEM UNIT

931

932

100: SOLUTION SEARCH APPARATUS

EP 1 617 358 A1

Fig. 2

100

912 : BUS

911 CPU

913 ROM
914 RAM
901 CRT
902 K/B
903 MOUSE
915 COMMUNICATION BOARD
904 FDD
905 CDD
906 PRINTER
907 SCANNER

920 MAGNETIC DISK DRIVE

921 OS
922 WINDOW SYSTEM
923 PROGRAM GROUP
924 FILE GROUP

# Fig. 3

**SOLUTION SEARCH APPARATUS** (100)

1 1 — PARAMETER SEARCH RANGE INPUT PART (SEARCH RANGE STORING STEP)

1 2 — PARAMETER SETTING PART (INITIAL VALUE SETTING STEP)

1 3 — UNIFORM DISTRIBUTION CALCULATION PART

1 4 — NORMAL DISTRIBUTION CALCULATION PART

1 5 — SEARCH PART (SEARCHING STEP)

**STORAGE DEVICE (STORING PART)** (2 0)

PARAMETER SEARCH RANGE STORING PART — 2 1

PARAMETER STORING PART — 2 2

|  | p 0 | p 1 | p 2 | P 3 |
|---|---|---|---|---|
| GENE 1 |  |  |  |  |
| GENE 2 |  |  |  |  |
| GENE 3 |  |  |  |  |
| ⋮ | ⋮ | ⋮ | ⋮ | ⋮ |
| GENE 1 0 0 |  |  |  |  |

Fig. 4

0 (1)    1 (1 0)    2 (1 0 0)    3 (1 0 0 0)    4 (1 0 0 0 0)  5 (1 0 0 0 0 0)

EP 1 617 358 A1

# Fig. 5

- GENE : EXPRESS PARAMETER VALUE BY 0 AND 1, AND GENERATE AS UNIFORM RANDOM NUMBERS

> HOWEVER, WITH RESPECT TO PARAMETER WHOSE APPROXIMATE VALUE CAN BE ESTIMATED, REGARD THE VALUE AS AVERAGE, AND DISTRIBUTE UNIFORMLY IN RANGE OF 10% OF SEARCH RANGE, FOR EXAMPLE.

| 1 | 1 | 0 | 0 | · · · | 0 | 0 | 1 | 0 |

$p_1$        $p_n$

| 1 | 1 | 0 | · · · | 0 | 0 | 1 | 1 |
| 0 | 1 | 0 | · · · | 1 | 0 | 1 | 0 |
| 1 | 1 | 0 | 1 | · · · | 0 | 0 | 0 | 0 |
| 0 | 1 | 0 | 0 | · · · | 1 | 0 | 0 | 1 |

- CALCULATE FITNESS VALUE : $\Sigma \{ (Target_i - f(X_i; p)) / \sigma_i \}^2$ etc.

- SELECT PARENT : INCREASE SELECTION PROBABILITY AS FITNESS VALUE BECOMES LOW

- SELECT PARENT

PARENT 1 (GENE A)

PARENT 2 (GENE B)

CROSSOVER

OFFSPRING 1 (GENE C)

OFFSPRING 2 (GENE D)

- MUTATION : BIT INVERSION → ESTIMATE CONDITIONS → CORRECTION

- GENERATION ALTERNATION : REPLACE PARENT INDIVIDUAL WITH OFFSPRING INDIVIDUAL, BUT DO NOT REPLACE BEST PARENT

EP 1 617 358 A1

# Fig. 6

# Fig. 7

# Fig. 8

|  | N=200 | |
|---|---|---|
|  | w/o log | with log |
| TRIAL 1 | 0.657496 | 0.004476 |
| TRIAL 2 | 0.655989 | 0.020523 |
| TRIAL 3 | 0.144549 | 0.013369 |
| TRIAL 4 | 0.588626 | 0.138279 |
| TRIAL 5 | 0.740013 | 0.015033 |
| TRIAL 6 | 0.432462 | 0.017662 |
| TRIAL 7 | 0.013868 | 0.127352 |
| TRIAL 8 | 0.681218 | 0.043117 |
| TRIAL 9 | 0.379437 | 0.190982 |
| TRIAL 1 0 | 0.103333 | 0.013269 |
| AVERAGE VALUE | 0.415499 | 0.058406 |

# Fig.9

UNUSED

0 (1)　　　1 (1 0)　　p 0'　　2 (1 0 0)　　　　3 (1 0 0 0)　　　　4 (1 0 0 0 0)　　　　5 (1 0 0 0 0 0)

[ESTIMATED VALUE]

Fig. 10

Fig.11

EP 1 617 358 A1

# Fig.12

0  10   10000   20000   30000   40000   50000   60000   70000   80000   90000   100000

| **European Patent Office** | **DECLARATION** which under Rule 45 of the European Patent Convention shall be considered, for the purposes of subsequent proceedings, as the European search report | **Application Number** EP 04 03 0110 |
| --- | --- | --- |

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
| --- | --- |
| Reason: | G06F17/60 |

The claims of the application are formulated to merely specify commonplace features relating to matter excluded from patentability under Art. 52(2) and (3) EPC and its technological implementation. Due to the attendant lack of resolution of technical definition present, the search division could not establish a technical problem addressed in order to be able to carry out a meaningful search into the state of the art (Rule 45 EPC). See also Guidelines Part B Chapter VIII. Accordingly no search has been carried out.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
| --- | --- | --- |
| The Hague | 31 January 2005 | De Smet, M |

EPO FORM 1504 (P04C37)